Europäisches Patentamt

European Patent Office

Office européen des brevets

(19)

(11) Publication number: **0 602 605 A2**

## EUROPEAN PATENT APPLICATION

(12)

(21) Application number: **93120148.7**

(22) Date of filing: **14.12.93**

(51) Int. Cl.5: **G06F 15/20**

(30) Priority: **14.12.92 JP 354120/92**

(43) Date of publication of application:
**22.06.94 Bulletin 94/25**

(84) Designated Contracting States:
**DE FR GB**

(71) Applicant: **Dainippon Screen Mfg. Co., Ltd.**
**1-1, Tenjinkitamachi**
**Teranouchi-Agaru 4-chome**
**Horikawa-Dori**
**Kamikyo-ku Kyoto 602(JP)**

(72) Inventor: **Kitani, Takanori, c/o Dainippon**
**Screen Mfg.Co.Ltd.**
**1-1 Tenjinkitamachi,**
**Teranouchi-agaru 4-chome**
**Horikawa-dori, Kamikyo-ku, Kyoto(JP)**
Inventor: **Ohsawa, Ikuo, c/o Dainippon Screen**

**Mfg.Co.Ltd.**
**1-1 Tenjinkitamachi,**
**Teranouchi-agaru 4-chome**
**Horikawa-dori, Kamikyo-ku, Kyoto(JP)**
Inventor: **Matsuoka,Kazuyuki, c/o Dainippon**
**Screen Mfg.Co.Ltd**
**1-1 Tenjinkitamachi,**
**Teranouchi-agaru 4-chome**
**Horikawa-dori, Kamikyo-ku, Kyoto(JP)**
Inventor: **Ichihashi, Kazuya, c/o Dainippon**
**Screen Mfg.Co.Ltd**
**1-1 Tenjinkitamachi,**
**Teranouchi-agaru 4-chome**
**Horikawa-dori, Kamikyo-ku, Kyoto(JP)**

(74) Representative: **Goddar, Heinz J., Dr. et al**
**FORRESTER & BOEHMERT**
**Franz-Joseph-Strasse 38**
**D-80801 München (DE)**

(54) **Method of and apparatus for allocating data to the pages of a book.**

(57) A method of and apparatus for allocating already prepared page data sets to actual pages of a book. When a page number of the book is designated, a page data set corresponding to the designated page number is obtained and judged whether the page data set is a normal page data set or a spread page data set, where the normal page data set corresponds to a page of the book and the spread page data set corresponds to a pair of facing pages of the book. On the other hand, it is judged whether the designated page number corresponds to the left-side page or to the right-side page of facing pages of the book. Then the page data set is allocated to the page of the designated page number when the page data set is judged to be a normal page data set, and to facing pages including the page of the designated page number when the page data set is judged to be a spread page data set.

Fig. 10

EP 0 602 605 A2

The present invention relates to a method of and an apparatus for allocating page data to the pages of a book.

## BACKGROUND OF THE INVENTION

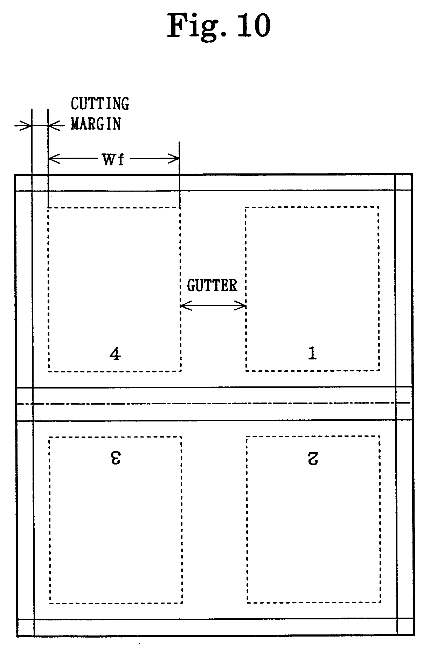

A book or a magazine is normally composed of plural sections, and a section is made of a folded signature. Normally, a signature contains four, eight, sixteen or thirty-two pages on both sides. An eight page signature is illustrated in Fig. 10. When a signature is folded, the pages on the signature are not arranged orderly as to the page number, and some of the pages are upside down, as shown in Fig. 10. Thus an automatic page data allocating machine has been developed. For the Macintosh personal computers (products of Apple Computer, Inc.) on which a number of small size publishing software products are available, a software product for the page data allocating (or page layouting) process named Mac Impostrip (ULTIMATE Technographics, Inc., Canada) has been developed. When the data sets (a data set corresponds to a page) constituting a book are prepared using the PostScript (a page description language from Adobe Systems, Inc.), and the size (i.e., the number of pages) of a signature is given, the Impostrip composes the signature automatically by properly allocating the page data sets to the pages of the signatures.

A difficulty in allocating page data sets to the actual pages of a book lies in the treatment of the spread page data set which spans two facing pages. Spread pages must be placed on facing pages, or the first half and the latter half of a spread page are separated as the two halves are located back to back on the same page sheet. Conventional page data allocating machines (e.g., the above cited Macintosh with Impostrip) can handle normal page data sets which can be contained in a single page, but cannot handle spread page data sets automatically. Thus the operator must allocate the spread page data sets manually on facing pages, which is a troublesome work by itself among the automated page data allocating process, and it is especially time consuming when a page data set is inserted before the spread pages after the page data allocating process is once finished. Though the Japanese Unexamined Patent Application No. 4-136848 describes a page data allocating machine that can handle the spread page data sets, it does not teach the relocation of the spread page data sets when a page data set is inserted before the spread pages.

## SUMMARY OF THE INVENTION

An object of the present invention is therefore to provide a method of and an apparatus for allocating and relocating a plurality of page data sets prepared for a book to the actual pages of the book, taking spread pages correctly into account.

According to the present invention, a method of allocating a plurality of page data sets to pages constituting a book according to the present invention includes the steps of:

designating a page number of the book successively one by one;

obtaining a page data set corresponding to the designated page number;

judging whether the page data set is a normal page data set or a spread page data set, where the normal page data set corresponds to a page of the book and the spread page data set corresponds to a pair of facing pages of the book;

judging whether the designated page number corresponds to the left-side page or to the right-side page of facing pages of the book;

allocating the page data set to the page of the designated page number when the page data set is judged to be a normal page data set; and

allocating the page data set to facing pages including the page of the designated page number when the page data set is judged to be a spread page data set.

Thus a spread page data set is prevented from being separated by having the two halves of the spread page located back-to-back on a single page sheet and correctly allocated to facing pages.

The method may further comprise the step of shifting each of the page data sets allocated to the pages of the designated page number and the following page numbers backward to the next pages when a page data set is already allocated to the page of the designated page number or to the other page of the facing pages.

And the page data allocating apparatus according to the present invention includes:

spread judging means for judging whether a page data set is a normal page data set or a spread page data set, where the normal page data set corresponds to a page of the book and the spread page data set corresponds to a pair of facing pages of the book;

side judging means for judging whether a page number of the book corresponds to the left-side page or to the right-side page of facing pages;

managing means for designating a page number successively throughout all the page numbers of the book; and

page data allocating means, responsive to the page number designated by the managing means, for obtaining a page data set corresponding to the designated page number,

for employing the spread judging means to judge whether the page data set is a normal page data set or a spread page data set,

for employing the side judging means to judge whether the designated page number corresponds to the left-side page or to the right-side page,

for allocating the page data set to the page of the designated page number when the page data set is judged to be a normal page data set, and

for allocating the page data set to a pair of facing pages including the page of the designated page number when the page data set is judged to be a spread page data set.

Similarly, the page data allocating apparatus may further comprise page data shifting means for shifting each of the page data sets allocated to the pages of the designated page number and the following page numbers backward to the next pages when a page data set is already allocated to the page of the designated page number or to the other page of the pair of facing pages.

Details and other features of the present invention are described in the following description of the preferred embodiments.

BRIEF DESCRIPTION OF THE DRAWINGS

Fig. 1 is a block diagram of the hardware structure of a Colour Electronic Prepress System (CEPS) embodying the present invention.

Fig. 2 is a block diagram of the functional structure of the CEPS.

Fig. 3 is the first half flowchart of a page data allocating process executed by the CEPS.

Fig. 4 is the latter half flowchart of the page data allocating process.

Fig. 5A through Fig. 5D are the flowcharts of the subroutine for page data shifting process.

Fig. 6 is the flowchart of the subroutine for spread judging process.

Fig. 7 is the flowchart of the subroutine for side judging process.

Fig. 8 is the flowchart of the subroutine for determining an offset used in allocating the page data set to the page.

Fig. 9 is the flowchart of the subroutine for the process of determining the page number of the other side of facing pages.

Fig. 10 is a plan view of an example of a signature.

DETAILED DESCRIPTION OF A PREFERRED EMBODIMENT

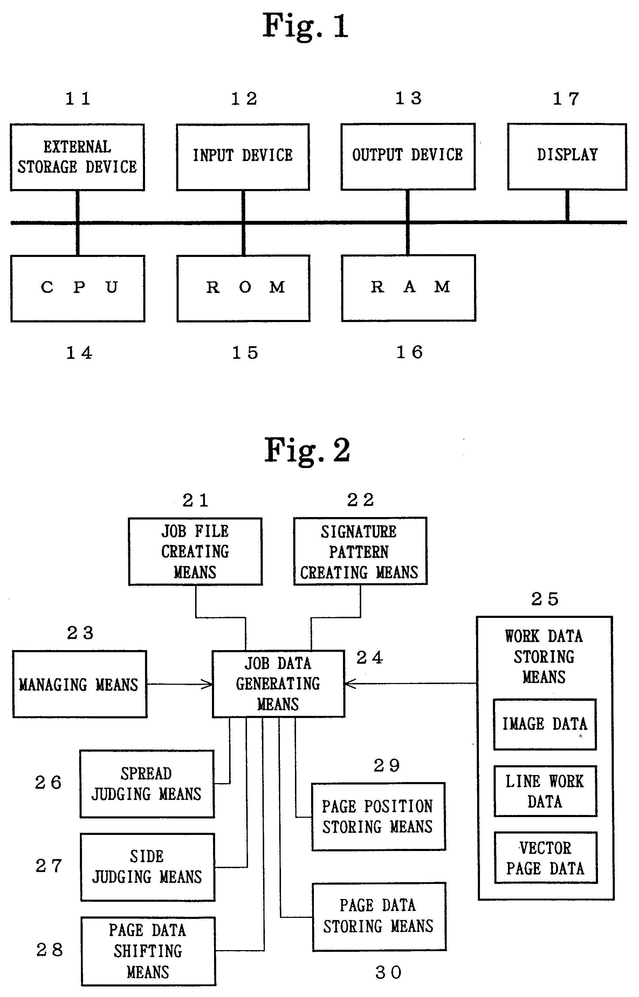

An apparatus called Color Electronic Prepress System (CEPS) is described as an embodiment of the present embodiment. The CEPS is basically a computer including, as shown in Fig. 1, a CPU 14, a ROM 15, a RAM 16, an external storage device (such as a hard disk) 11, an input device (such as a keyboard) 12, an output device (such as a recorder) 13, and functions as a page data allocating machine owing to programs prepared in the ROM 15 or loaded from the external storage device 11 to the RAM 16.

In executing the programs for allocating page data sets to the pages of a book, as shown in Fig. 2, the CPU 14 functions, according to the program steps, as: job file creating means 21, signature pattern creating means 22, managing means 23, job data generating means 24, spread judging means 26, side judging means 27 and page data shifting means 28. The internal memory (RAM) 16 or the external storage device 11 functions as page position storing means 29, page data memory 30 and working data storing means 25. The operation executed by those means for allocating page data sets to the pages of a book is as follows.

First, the job file creating means 21 creates a job file for the job of creating a book. In the job file, the name of the job, the maximum output size, the signature pattern (including the folding manner, the number of pages, the position of the pages, etc.) are registered.

The signature pattern creating means 22 is used for newly registering or for updating a signature pattern in the job file. In the CEPS of the present embodiment, a variety of standard signature patterns are prepared in a pattern library, and the operator can get an appropriate signature pattern from the library and register it unchanged in the job file or by changing some particulars (e.g., size of the page frame, cutting margin width, gutter width, etc. (cf. Fig. 10)). The operator can create a new signature pattern using the signature pattern creating means 22 and add the new signature pattern to the pattern library.

When the signature pattern is determined and a page number of a book is given, the location of the page in a signature and the side of the page (i.e., right or left of the facing pages) are determined. When a page data set (i.e., a set of data representing a page and including the data of the serial number, the size, pictures or letters included in the page, location of the pictures and letters, etc.) corresponds to a normal single page, the side of the facing pages to which the page data set is allocated is not important, but when a page data set corresponds to a spread page, the data in the page data set corresponding to the left side of the spread page must be placed on the left and the data corresponding to the right side of the spread page must be placed on the right of the facing pages. In the CEPS of the present embodiment, the correct page data allocation is performed including the spread pages by executing the following steps on each page under the control of the managing means 23.

The managing means 23 designates a page number of the book sequentially one by one and gives it to the job data generating means 24. The job data generating means 24 (which corresponds to the page data allocating means of the present invention) stores the page number to the page position storing means 29. Then a page data set corresponding to the designated page number is obtained from the work data storing means 25, and the size of the page data set is judged (i.e., whether the page data set is for a normal page or for a spread page) by the spread judging means 26. When the page data set is judged to be a normal page data set, the page data set is stored directly in the page data memory 30 for the page. When the page data set is judged to be a spread page data set, the page data allocating process described later is executed and the page data set is stored properly in the page data memory 30 for the facing pages.

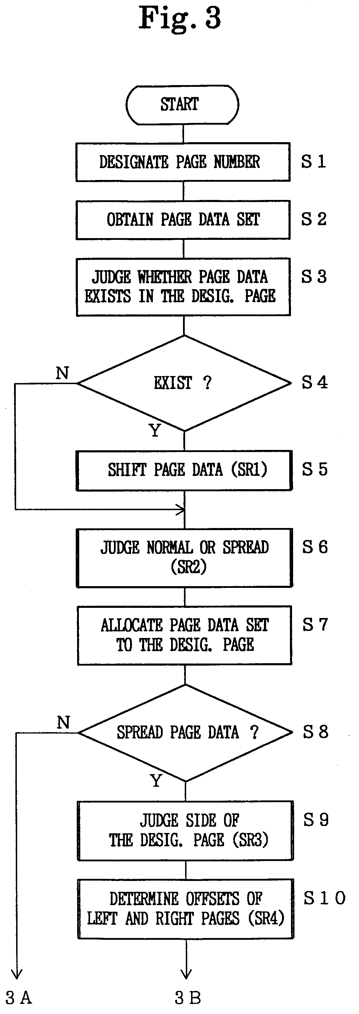

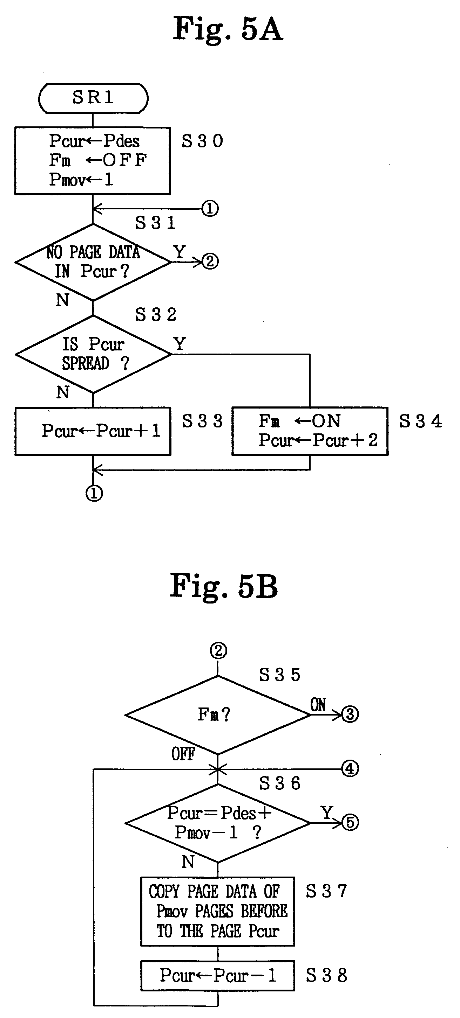

The page data allocating process is explained referring to Figs. 3 through 9. First, the managing means 23 designates a page number to be processed and gives the page number to the job data generating means 24 (step S1). The job data generating means 24 gets a new page data set corresponding to the designated page number from the work data storing means 25 (step S2). Then it is judged whether any data exists in (or has been already allocated to) the page of the designated page number (step S3). When any data exists in the designated page, the page data shifting process is executed by the page data shifting means 28 in which every page data set contained in the designated page and the following pages are shifted to the next pages. The subroutine (SR1) for the page data shifting process is detailed referring to the flowcharts of Fig. 5A through Fig. 5D.

First, the designated page number $P_{des}$ is put into the variable $P_{cur}$ representing the currently processed page number in this subroutine. Then a spread flag $F_m$ is set at OFF, and a variable $P_{mov}$ representing the shifting distance is set at 1 (step S30). Then it is judged whether any page data exists in the currently processing page $P_{cur}$ (step S31). When no data exists in the currently processed page $P_{cur}$, the steps in Fig. 5B are executed, which is described later. When any data already exists in the currently processed page $P_{cur}$, it is judged whether the data is a part of a spread page data set (step S32). When the page data is a part of a spread page data set, the spread flag $F_m$ is turned ON, the current page number $P_{cur}$ is incremented by 2 (step S34), and the process returns to step S31. When the page data is not a spread page data, the variable $P_{cur}$ is incremented by 1 (step S33) and the process returns to step S31.

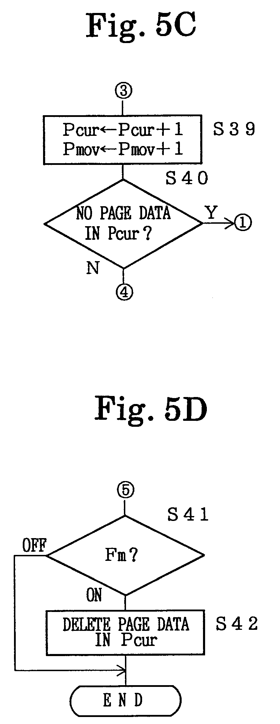

When it is judged at step S31 that there exists no data in the page after the current page number $P_{cur}$ is incremented at step S33 or at step S34, the process goes to step S35 in Fig. 5B, where the spread flag $F_m$ is examined. When the spread flag $F_m$ is ON, the process proceeds to step S41 of Fig. 5C. When the spread flag $F_m$ is OFF, (the process of step S36 is described later) the page data set of the page preceding $P_{mov}$ pages from the current page is copied to the current page $P_{cur}$ (step S37). Then the variable $P_{cur}$ is decremented by 1 (step S38), and the process returns to step S36. Thus the page data sets are copied page by page to the next pages until $P_{cur} = (P_{des} + P_{mov} - 1)$, when the process proceeds from step S36 to step S41 of Fig. 5D.

When the spread flag $F_m$ is judged to be ON at step S35, the process proceeds to step S39 of Fig. 5C where the current page number $P_{cur}$ and the page shifting distance $P_{mov}$ are both incremented by 1 (hence now $P_{mov} = 2$). Then it is judged whether the current page $P_{cur}$ contains any page data (step S40). When the current page $P_{cur}$ contains any page data, the process returns to step S36 of Fig. 5A, and when $P_{cur}$ does not contain any page data, the process returns to step S31 of Fig. 5A. When the current page number $P_{cur}$ is judged to have reached $(P_{des} + P_{mov} -1)$ at step S36 of Fig. 5B, the process proceeds to step S41 of Fig. 5D, where the spread flag $F_m$ is examined (step S41). When the spread flag $F_m$ is determined to be ON (a spread page), the data in the current page $P_{cur}$ is deleted (step S42) and the subroutine SR1 ends. When the flag $F_m$ is determined to be OFF (a normal page), the subroutine SR1 ends directly.

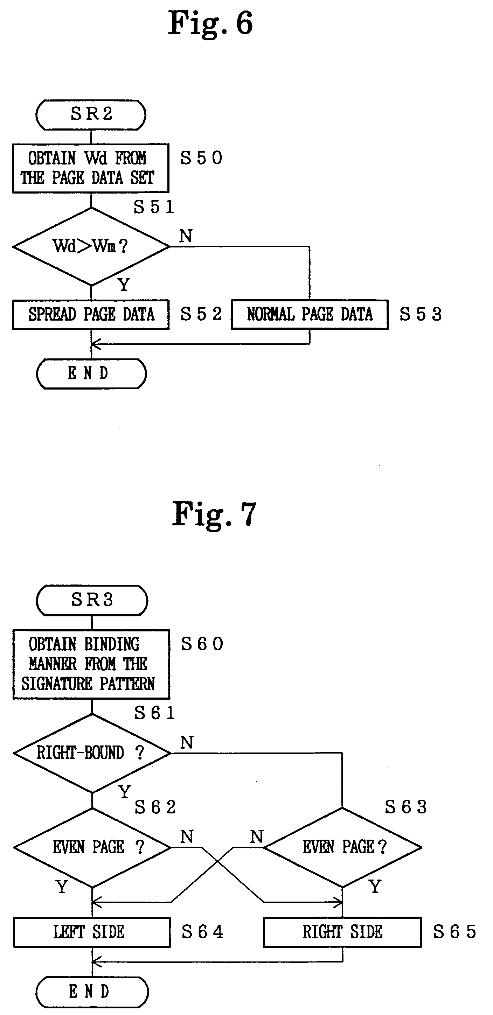

Reference returns to Fig. 3. When the designated page does not contain any page data (i.e., no page data is allocated yet to the designated page), the process proceeds to step S6, where the job data generating means 24 employs the spread judging means 26 to judge whether the new page data set obtained at step S2 is a spread page data set or a normal page data set. The subroutine SR2 of the spread judging process is detailed referring to Fig. 6. First, the data of the page width $w_d$ is obtained from the new page data set (step S50), and it is judged whether the page width $w_d$ exceeds a preset reference value $w_m$ (step S51). The reference value $w_m$ is the critical width over which the page data set is allocated to two pages (or a pair of facing pages). An example of the reference value $w_m$ is $w_m = 1.5 \times w_f$, where $w_f$ is the width of a normal page of the book. When the page width $w_d$ of the new page data set is greater than the reference value $w_m$ ($w_d > w_m$), the new page data set is judged to be a spread page data set (step S52), and when $w_d \leq w_m$, the page data set is judged to be a normal page data set (step S58).

After the new page data set is judged to be a normal or a spread at step S6, the page data set is allocated to the designated page (step S7). When the new page data set is not a spread page data set (i.e., the new page data set is a normal page data set), the job data generating means 24 ends the process at step S8.

When the new page data set is a spread page data set, the process proceeds to step S9 where the side judging means 27 judges whether the designated page is at the left or at the right of facing pages of the book. The subroutine SR3 for the side judging process is detailed referring to Fig. 7.

First, the information regarding how the book is to be bound is obtained from the signature pattern data contained in the job file (step S60), and it is judged whether the book is left-bound or right-bound (step S61). When the book is right-bound and the designated page number is even, the page is judged to be at the left of the facing pages (step S62 to step S64). When the book is right-bound and the designated page number is odd, the page is judged to be at the right of the facing pages (step S62 to step S65). When the book is left-bound, the opposite applies (steps S63 S64, and S65). In some methods of binding, the parity is reversed, in which case such information is included in the signature pattern data of the job file, and the judgements at steps S61 to S63 are automatically modified properly.

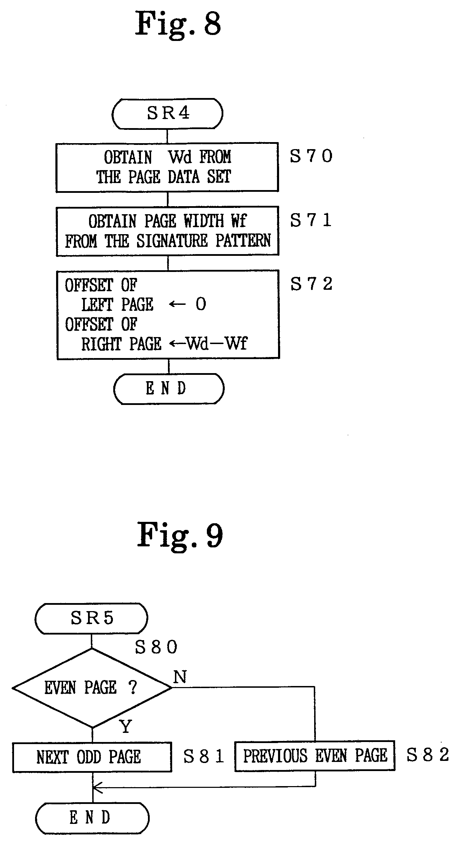

Reference returns to Fig. 3. After the side of the designated page is determined at step S9, the placing offset of the new page data set (which is a spread page data set as judged at step S8) is determined (step S10). The offset determining subroutine SR4 is detailed referring to Fig. 8. First, the value of the width $w_d$ of the area occupied by the page data is obtained from the page data set (step S70), and the information of the width $w_f$ of the actual page (cf. Fig. 10) is obtained from the signature pattern data (step S71). When the page data set is allocated to the left-side page of the facing pages, the offset is set at zero (0), and when the page data set is allocated to the right-side page of the facing pages, the offset is set at $(w_d - w_f)$ (step S72).

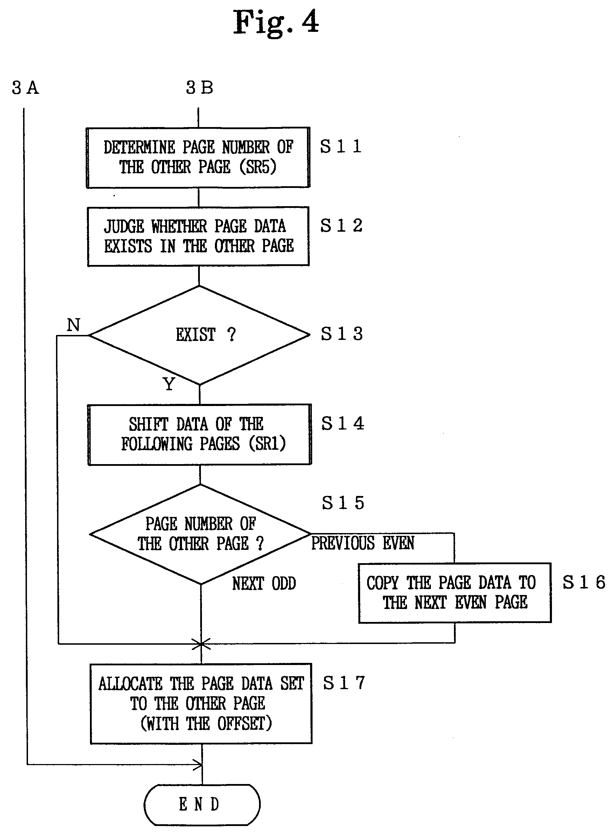

After the offset is determined at step S10, the page number of the other side of the facing pages is determined at step S11 (Fig. 4). The subroutine SR5 for determining the page number of the other side is detailed referring to Fig. 9. First, it is judged whether the current designated page number is even (step S80). When the number is even, the next number (the current number plus one, which is, of course, odd) is assigned to "the other page number" (step S81). When the current page number is not even (i.e., odd), the previous number (the current number minus one, which is even) is assigned to "the other page number" (step S82). Though it is assumed here that the left-side of the facing pages has even page numbers and the right-side has odd page numbers, it depends on the binding manner or numbering manner of the book, and the subroutine can assign the correct page number referring to such information included in the job file.

After the page number of "the other page" is determined at step S11, it is then judged whether any data exists in (or is already allocated to) "the other page" (step S12). When no page data exists in (or no data is yet allocated to) "the other page", the process proceeds to step S17 where the page data set obtained at step S2 is allocated to "the other page" with the offset calculated at step S10. That is, when the designated page is at the left of the facing pages, the page data is allocated with zero offset, and when the designated page number is at the right of the facing pages, the page data is allocated with the offset of $(w_f - w_d)$. Thus the page data corresponding to the left portion of the page data set (which is a spread page data set according to the judgment of step S6 and step S8) is correctly assigned to the left side page of the facing pages and the page data corresponding to the right portion of the page data set is correctly assigned to the right side page of the facing pages.

When any data is assigned to "the other page", the process proceeds from step S13 to step S14, where the subsequent pages are shifted backward one by one as described above for step S5. Then it is judged at step S15 whether the page number of "the other page" is the odd number next to the currently processing page number or the even number previous to the currently processing page number (as described above, it is assumed here that the left side has the even page numbers and the right side has the odd page numbers). When "the other page" has the next odd number, the above-described page data allocating process is resumed at step S17. When "the other page" has the previous even number, the page data allocated to the page (of the previous even number) is moved to the page of the next even number at step S16, and the page data allocating process is resumed at step S17.

In summary, when the job data generating means 24 receives a page number (designated page number) from the managing means 23, the job data generating means 24 gets the page data set of the designated page, and judges whether the page data set is a normal page data set or a spread page data set. Then the job data generating means 24 allocates the page data set correctly to the page of the designated page number according to the spread judgment result. Then the managing means 23 designates the next page number and gives it to the job data generating means 24, which repeats the above process for the nextly designated page. Thus all the page data sets are correctly allocated to the pages of the signatures of the book taking the spread pages into account.

When, after the entire allocation of the page data sets is finished for the book, a new page data set is intended to be inserted at a certain page of the book, the operator gives (actually, inputs on the keyboard) the page number (at which the new page data set is inserted) to the managing means 23. In this case, the managing means 23 and the job data generating means 24 execute the above process from step S1 for the inserted page and the following pages, where spread pages are again relocated correctly on facing pages.

The features disclosed in the foregoing description, in the claims and/or in the accompanying drawings may, both separately and in any combination thereof, be material for realising the invention in diverse forms thereof.

**Claims**

1. A method of allocating a plurality of page data sets to pages constituting a book, the method comprising the steps of:

designating a page number of the book successively one by one;

obtaining a page data set corresponding to the designated page number;

judging whether the page data set is a normal page data set or a spread page data set, where the normal page data set corresponds to a page of the book and the spread page data set corresponds to a pair of facing pages of the book;

judging whether the designated page number corresponds to the left-side page or to the right-side page of facing pages of the book;

allocating the page data set to the page of the designated page number when the page data set is judged to be a normal page data set; and

allocating the page data set to facing pages including the page of the designated page number when the page data set is judged to be a spread page data set.

2. The page data allocating method according to claim 1, wherein the method further comprises the step of shifting each of the page data sets allocated to the pages of the designated page number and the following page numbers backward to the next pages when a page data set is already allocated to the page of the designated page number or to the other page of the facing pages.

3. The page data allocating method according to claim 1, wherein a page data set is judged to be a normal page data set when the value of page width data included in the page data set is not greater than the width of the page to be allocated, and judges to be a spread page data set otherwise.

4. An apparatus for allocating a plurality of page data sets to pages constituting a book, the apparatus comprising:

spread judging means for judging whether a page data set is a normal page data set or a spread page data set, where the normal page data set corresponds to a page of the book and the spread page data set corresponds to a pair of facing pages of the book;

side judging means for judging whether a page number of the book corresponds to the left-side page or to the right-side page of facing pages;

managing means for designating a page number successively throughout all the page numbers of the book; and

page data allocating means, responsive to the page number designated by the managing means,

for obtaining a page data set corresponding to the designated page number,

for employing the spread judging means to judge whether the page data set is a normal page data set or a spread page data set,

for employing the side judging means to judge whether the designated page number corresponds to the left-side page or to the right-side page,

for allocating the page data set to the page of the designated page number when the page data set is judged to be a normal page data set, and

for allocating the page data set to a pair of facing pages including the page of the designated page number when the page data set is judged to be a spread page data set.

5. The page data allocating apparatus according to claim 4, wherein the page data allocating apparatus further comprises page data shifting means for shifting each of the page data sets allocated to the pages of the designated page number and the following page numbers backward to the next pages when a page data set is already allocated to the page of the designated page number or to the other page of the pair of facing pages.

6. The page data allocating apparatus according to claim 4, wherein the spread judging means judges that a page data set is a normal page data set when the value of page width data included in the page data set is not greater than the width of the page to be allocated, and otherwise judges that a page data set is a spread page set.

# Fig. 1

| 11 | 12 | 13 | 17 |
|---|---|---|---|
| EXTERNAL STORAGE DEVICE | INPUT DEVICE | OUTPUT DEVICE | DISPLAY |

| C P U | R O M | R A M |
|---|---|---|
| 14 | 15 | 16 |

# Fig. 2

```
21                      22
JOB FILE                SIGNATURE
CREATING                PATTERN
MEANS                   CREATING MEANS
```

```
                                              25
                                         WORK DATA
                                         STORING
                                         MEANS
23
                    JOB DATA      24
MANAGING MEANS  →   GENERATING  ←             IMAGE DATA
                    MEANS

26  SPREAD                                    LINE WORK
    JUDGING MEANS              29             DATA

27  SIDE               PAGE POSITION          VECTOR
    JUDGING MEANS       STORING MEANS          PAGE DATA

28  PAGE DATA          PAGE DATA
    SHIFTING           STORING MEANS
    MEANS               30
```

8

# Fig. 3

```
            ( START )
               │
  ┌────────────────────────────┐
  │  DESIGNATE PAGE NUMBER      │  S 1
  └────────────────────────────┘
               │
  ┌────────────────────────────┐
  │  OBTAIN PAGE DATA SET       │  S 2
  └────────────────────────────┘
               │
  ┌────────────────────────────┐
  │  JUDGE WHETHER PAGE DATA    │  S 3
  │  EXISTS IN THE DESIG. PAGE  │
  └────────────────────────────┘
               │
    N      ◇ EXIST ? ◇            S 4
  ←────────
               │ Y
  ┌────────────────────────────┐
  │  SHIFT PAGE DATA (SR1)      │  S 5
  └────────────────────────────┘
               │
  ┌────────────────────────────┐
  │  JUDGE NORMAL OR SPREAD     │  S 6
  │  (SR2)                      │
  └────────────────────────────┘
               │
  ┌────────────────────────────┐
  │  ALLOCATE PAGE DATA SET     │  S 7
  │  TO THE DESIG. PAGE         │
  └────────────────────────────┘
               │
    N   ◇ SPREAD PAGE DATA ? ◇    S 8
  ←────────
               │ Y
  ┌────────────────────────────┐
  │  JUDGE SIDE OF              │  S 9
  │  THE DESIG. PAGE (SR3)      │
  └────────────────────────────┘
               │
  ┌────────────────────────────┐
  │  DETERMINE OFFSETS OF       │  S 1 0
  │  LEFT AND RIGHT PAGES (SR4) │
  └────────────────────────────┘
               │
   3 A         3 B
```

EP 0 602 605 A2

# Fig. 4

3 A         3 B

```
        ┌─────────────────────────┐
        │ DETERMINE PAGE NUMBER OF │  S 1 1
        │  THE OTHER PAGE (SR5)    │
        └─────────────────────────┘
        ┌─────────────────────────┐
        │ JUDGE WHETHER PAGE DATA  │  S 1 2
        │ EXISTS IN THE OTHER PAGE │
        └─────────────────────────┘

  N  ◇─────────────────────◇  S 1 3
     ◇      EXIST ?        ◇
     ◇─────────────────────◇
              Y
        ┌─────────────────────────┐
        │    SHIFT DATA OF THE     │  S 1 4
        │  FOLLOWING PAGES (SR1)   │
        └─────────────────────────┘

                             S 1 5
     ◇─────────────────────◇
     ◇   PAGE NUMBER OF    ◇  PREVIOUS EVEN
     ◇  THE OTHER PAGE ?   ◇────────────────┐
     ◇─────────────────────◇                │
              NEXT ODD         ┌──────────────────────┐
                               │ COPY THE PAGE DATA TO │  S 1 6
                               │  THE NEXT EVEN PAGE   │
                               └──────────────────────┘

        ┌─────────────────────────┐
        │ ALLOCATE THE PAGE DATA SET│  S 1 7
        │    TO THE OTHER PAGE     │
        │    (WITH THE OFFSET)     │
        └─────────────────────────┘

              (  E N D  )
```

# Fig. 5A

```
┌─────────────┐
│    S R 1    │
└─────────────┘
        │
┌─────────────┐
│ Pcur←Pdes   │  S 3 0
│ Fm  ←OFF    │
│ Pmov←1      │
└─────────────┘
        │←──────────────── ①
        │         S 3 1
       ╱╲
      ╱  ╲ NO PAGE DATA   Y
     ╱    ╲ IN Pcur?  ──────→ ②
      ╲  ╱
       ╲╱
        │ N
        │         S 3 2
       ╱╲
      ╱  ╲ IS Pcur      Y
     ╱    ╲ SPREAD?  ──────────────┐
      ╲  ╱                         │
       ╲╱                          │
        │ N                        │
┌─────────────┐         ┌──────────────┐
│ Pcur←Pcur+1 │  S 3 3  │ Fm  ←ON      │ S 3 4
└─────────────┘         │ Pcur←Pcur+2  │
        │               └──────────────┘
        │←──────────────────────┘
        ①
```

# Fig. 5B

```
        ②
        │         S 3 5
       ╱╲
      ╱  ╲           ON
     ╱ Fm? ╲ ──────────→ ③
      ╲    ╱
       ╲  ╱
        ╲╱
        │ OFF
  ┌─────┤──────────────────── ④
  │     │         S 3 6
  │    ╱╲
  │   ╱  ╲ Pcur=Pdes+     Y
  │  ╱    ╲ Pmov−1? ──────────→ ⑤
  │   ╲  ╱
  │    ╲╱
  │     │ N
  │ ┌──────────────┐
  │ │ COPY PAGE DATA OF │ S 3 7
  │ │ Pmov PAGES BEFORE │
  │ │ TO THE PAGE Pcur  │
  │ └──────────────┘
  │     │
  │ ┌──────────────┐
  │ │ Pcur←Pcur−1  │ S 3 8
  │ └──────────────┘
  │     │
  └─────┘
```

# Fig. 5C

③

| |
|---|
| Pcur←Pcur+1 |
| Pmov←Pmov+1 |

S39

S40

NO PAGE DATA IN Pcur?  —Y→ ①

N

④

# Fig. 5D

⑤

S41

OFF ←  Fm?

ON

| |
|---|
| DELETE PAGE DATA IN Pcur |

S42

END

12

# Fig. 6

```
                    ( S R 2 )
                        │
        ┌───────────────────────────┐
        │ OBTAIN Wd FROM            │  S 5 0
        │ THE PAGE DATA SET         │
        └───────────────────────────┘
                        │        S 5 1
                      ◇◇◇◇◇
                    ◇        ◇        N
                   ◇ Wd>Wm ?  ◇ ──────────────────┐
                    ◇        ◇                     │
                      ◇◇◇◇◇                        │
                        │ Y                        │
        ┌───────────────────────┐         ┌─────────────────────┐
        │ SPREAD PAGE DATA      │ S 5 2   │ NORMAL PAGE DATA     │ S 5 3
        └───────────────────────┘         └─────────────────────┘
                        │←──────────────────────────┘
                    ( E N D )
```

# Fig. 7

```
                    ( S R 3 )
                        │
        ┌───────────────────────────┐
        │ OBTAIN BINDING            │  S 6 0
        │ MANNER FROM THE           │
        │ SIGNATURE PATTERN         │
        └───────────────────────────┘
                        │        S 6 1
                      ◇◇◇◇◇
                    ◇          ◇      N
                   ◇ RIGHT-BOUND ? ◇ ──────────────────────────────┐
                    ◇          ◇                                    │
                      ◇◇◇◇◇                                         │
                        │ Y  S 6 2                          S 6 3   │
                      ◇◇◇◇◇                                ◇◇◇◇◇
                    ◇        ◇     N          N          ◇        ◇
                   ◇ EVEN PAGE ? ◇ ───────  ───────────◇ EVEN PAGE ? ◇
                    ◇        ◇       ╲      ╱            ◇        ◇
                      ◇◇◇◇◇           ╲    ╱               ◇◇◇◇◇
                        │ Y            ╲  ╱                  │ Y
        ┌───────────────────────┐      ╳       ┌─────────────────────┐
        │ LEFT SIDE             │ S 6 4         │ RIGHT SIDE          │ S 6 5
        └───────────────────────┘              └─────────────────────┘
                        │←──────────────────────────────┘
                    ( E N D )
```

13

# Fig. 8

```
        ┌──────────────┐
        │     S R 4    │
        └──────┬───────┘
   ┌───────────┴────────────┐
   │  OBTAIN  Wd FROM       │  S 7 0
   │  THE PAGE DATA SET     │
   └───────────┬────────────┘
   ┌───────────┴────────────┐
   │  OBTAIN PAGE WIDTH Wf   │  S 7 1
   │ FROM THE SIGNATURE PATTERN │
   └───────────┬────────────┘
   ┌───────────┴────────────┐
   │ OFFSET OF              │  S 7 2
   │   LEFT PAGE  ← 0        │
   │ OFFSET OF              │
   │   RIGHT PAGE ←Wd—Wf     │
   └───────────┬────────────┘
        ┌──────┴───────┐
        │    E N D     │
        └──────────────┘
```

# Fig. 9

```
              ┌──────────────┐
              │     S R 5    │
              └──────┬───────┘
                     │           S 8 0
              ┌──────┴───────┐
              │              │      N
              ◇ EVEN PAGE ?  ◇──────────────────┐
              │              │                   │
              └──────┬───────┘                   │
                     │ Y                          │
   ┌─────────────────┴┐      ┌────────────────────┴─┐
   │  NEXT ODD PAGE   │ S 8 1 │  PREVIOUS EVEN PAGE  │ S 8 2
   └─────────┬────────┘      └──────────────────────┘
             │◄───────────────────────────┘
        ┌────┴─────┐
        │  E N D   │
        └──────────┘
```

# Fig. 10

CUTTING
MARGIN

← Wf →

GUTTER

4

1

3

2